# NEW EUROPEAN PATENT SPECIFICATION

(11) **EP 1 180 942 B2**
(45) Date of publication and mention of the opposition decision: **17.10.2012**
(45) Mention of the grant of the patent: 28.07.2004
(21) Application number: 00941980.5
(22) Date of filing: 17.05.2000
(51) Int. Cl.: A23G 9/16, A23G 9/04, A23G 9/22, A23G 9/28

(54) **PROCESS AND APPARATUS FOR PRODUCTION OF A FROZEN FOOD PRODUCT**
VORRICHTUNG UND VERFAHREN ZUR HERSTELLUNG EINES GEFRORENEN NAHRUNGSMITTELS
PROCEDE ET APPAREIL SERVANT A ELABORER UN PRODUIT SURGELE

(30) Priority: 28.05.1999 GB 9912629
(43) Date of publication of application: 27.02.2002
(73) Proprietor: Unilever PLC, London EC4Y 0DY (GB); Unilever N.V., 3013 AL Rotterdam (NL)
(72) Inventor: BAKKER, Bastiaan Hendrik Unilever Res. Vlaardingen, NL-3133 AT Vlaardingen (NL); BONGERS, Peterus Martinus Maria, Bedford, Bedfordshire MK44 1LQ (GB); WANG-NOLAN, Wei, Bedford, Bedfordshire MK44 1LQ (GB)
(74) Representative: Hugot, Alain
(86) International application number: PCT/EP2000/004724
(87) International publication number: WO 2000/072697

(56) References cited:
- EP-A- 0 438 996
- EP-A- 0 808 577
- WO-A-97/26800
- WO-A-98/09534
- WO-A-99/24236
- WO-A-99/25537
- US-A- 3 954 366
- US-A- 4 234 259
- US-A- 5 345 781
- US-A- 5 713 209

## Description

### Technical field of the invention

The present invention relates to a process and an apparatus for the production of a frozen food product and more particularly an ice cream.

### Background of the invention

Screw extruders such as single and twin screw extruders have been widely used and for a long time in the food industry, for example in the production of cereal based products. More recently, it has also been proposed to use single or twin screw extruders in the freezing of ice cream.

EP713650 discloses a process and an apparatus for extruding aerated frozen products wherein a twin screw extruder is used. The characteristic of the screws in the extruder is that they have a length over diameter ratio of between 30 and 60. It is not disclosed whether the diameter which is referred to is the diameter of the core of the screw or the diameter of the core of the screw plus its pitch. EP0808577 discloses a similar process and apparatus but whilst uses a single screw extruder having the same geometry.

EP561118 discloses a process and an apparatus for manufacturing frozen edible foams such as ice cream wherein a twin screw extruder is used. The geometry of the screw is defined by a (channel depth/channel width) ratio of approximately 0.1 and a pitch angle of between 22 and 30 degrees.

WO97/26800 discloses a process and an apparatus for manufacturing frozen edible foams such as ice cream wherein a single screw extruder is used. The geometry of the screw is defined by a (length of the screw/ inner diameter of the extruder barrel) ratio of between 5 and 10 a (pitch/external screw diameter) ratio of 1 to 2 and a (external diameter of the screw/inner diameter of the screw) of 1.1 to 1.4. According to the drawings, the screw has a single thread start.

One of the big problems faced when using an extruder for the manufacture of ice cream is that a temperature as low as possible is required while keeping an acceptable flow. Now, the lower the temperature the bigger the flow resistance which by generating frictions re-heats the product which is being cooled and limits the temperature which is thus achieved. There is therefore a need for optimising the geometry of the extruder in such a way that the increase in friction which is generated when the product is cooled is minimised in order to reach a temperature as low as possible.

It has now been found that it is possible to dramatically increase the performance of an extruder when used in the manufacturing of ice cream by;
. operating with a pitch angle which is outside what has been used up to now in the manufacturing of ice cream,
. operating with screws which have more than one thread start whereas up to now screws with only one thread start screws have been disclosed,
. operating with extruders which are much shorter than what has been used up to now.

### Tests and Definitions

### 1. Screw parameters

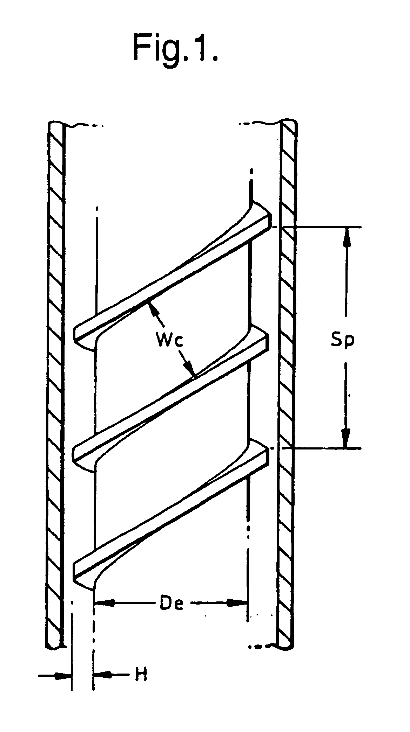

An extruder screw is defined by different parameters which need accurate definitions. In order to help in the definition of such parameters, reference is made to Fig.1 which discloses a typical screw fitted in a single screw extruder. Such an extruder is, for example, described in Engineering principles of plasticating extrusion - Zehev Tadmor - Krieger Publishing Company - 1978 - pages 39 to 45.
Screw length : LT (length of the screw which is in contact with the barrel)
Pitch length: Sp (axial distance of a full turn (screw lead))

Thread starts: A screw can have more than one helix, in the rest of the description, each helix is called a thread start and the number of thread starts is 'n'. On Fig.1, the screw which is represented has two thread starts.

Channel depth: H (the distance between the root of the screw and the inner surface of the barrel less the radial clearance between the crest of the screw and the inner surface of the barrel)

Screw diameter De: Diameter of the barrel less the distance between the root of the screw and the inner surface of the barrel.
Pitch angle: Arctg(Sp/pi.De)
Channel width: wc (distance between the flights along a helical line which is perpendicular to the flight).

### Summary of the invention

It is a first object of the present invention to provide an extruder comprising an extruding screw characterised by between 2 and 6 thread starts, preferably 2 and 5 thread starts, and a pitch angle of between 28 and 45 degrees, preferably between 32 and 42 degrees, and a LT/De ratio of between 2 and 10, more preferably between 2 and 5, even more preferably between 2 and 4.

The extruder comprises cooling means, more preferably, the cooling means are constituted by a cooling circuit wherein a cooling liquid is circulated. Even more preferably the cooling liquid is ammonia or nitrogen.

It has been found that the higher the number of thread starts, the higher the ammonia temperature required to achieve a given temperature at the output of the extruder, showing that increasing the number of thread starts leads to a better cooling effect.

Preferably the (H/wc ) ratio is between is less than 0.2, more preferably more than 0.1. It has been found that at low H/wc ratio, the heat exchange (cooling) improves but the thermal dissipation (heating) due to friction increases. Conversely at higher H/wc ratio, the heat exchange decreases but the thermal dissipation decreases even more, therefore, operating at high H/wc ratio is preferred. There is nevertheless a limit in the H/wc ratio which can be used since, above a certain limit, the product is no longer thermally homogeneous and cold and warm zones start appearing which do not mix any more.

Preferably also, the screw comprises between 3 and 4 thread starts and the cooling liquid is ammonia.

It has been found that, and contrary to what is suggested by the prior art, not only there is no need for going for long screws but it is effectively a waste of energy. If the screw is too long, the heat dissipation due to the friction caused by the increase in viscosity generated by the cooling tends to equate the cooling effect and the two phenomenon (cooling and heat dissipation) equilibrate and there is no cooling taking place at the end of the screw. Nevertheless, the friction existing at the end of the screw, where no cooling takes place, requires additional torque to keep the screw rotating for no benefit to the process or the end product.

The extruder is a single screw extruder.

It is a second object of the invention to provide a process for the manufacturing of frozen food product, wherein a food composition is mixed, aerated and cooled down to a temperature of between -4° and -7° and then processed in an extruder for further cooling down to a temperature of between -12° and -20°, characterised in that the extruder is a single screw extruder as defined in any of the claims 1 to 5.

### Detailed description of the invention

The present invention will be further described in the following examples and by reference to the drawing wherein;
. Figure 1 represents a schematic view of an extruder comprising an extruding screw.

An ice cream premix having the following composition;
Total fat: 8.4%
Stabiliser emulsifier: 0.56%
Added Sugars: 16.8%
Total protein : 3.5%
Total solids: 34.9%
   Of which Milk solids (non fat): 9.55%
Water: the rest
was aerated up to an overrun of 100% and cooled down to a temperature of -4.5°C using conventional means for subsequent processing.

The cooled product obtained was then conveyed to a single screw extruder according to the invention for subsequent extrusion. The product was extruded at 500 litre ice cream per hour in a single screw extruder cooled with ammonia, the screw having a diameter of 200mm.

Various screw geometries were tested and the results are summarised in the following table.

| Pitch angle | Channel depth (H) | Number of Thread Starts | H/Wc | Ice cream temperature | Torque | Ammonia temperature | Rotation speed | Extruder Inlet Pressure |
|---|---|---|---|---|---|---|---|---|
| (degree) | (mm) | | | (°C) | (Nm) | (°C) | (rpm) | (bar) |
| 12 | 15 | 2 | 0.28 | -11.6 | 1572 | -30.8 | 29.0 | 8 |
| 14 | 17 | 3 | 0.43 | -11.6 | 1486 | -30.5 | 30.2 | 8 |
| 19 | 10 | 4 | 0.25 | -12.1 | 1597 | -27.2 | 22.6 | 8 |
| 28 | 8 | 4 | 0.12 | -11.9 | 1629 | -27.5 | 18.8 | 8 |
| 35 | 8 | 4 | 0.10 | -12.9 | 1602 | -25.9 | 14.6 | 8 |
| 40 | 11 | 4 | 0.12 | -14.1 | 1600 | -26.8 | 12.4 | 8 |
| 40 | 5 | 6 | 0.09 | -12.2 | 1609 | -25.0 | 21.0 | 10 |
| 40 | 7 | 6 | 0.12 | -12.7 | 1604 | -26.1 | 20.6 | 10 |
| 40 | 9.8 | 6 | 0.17 | -13.7 | 1602 | -26.2 | 13.2 | 10 |
| 40 | 11 | 6 | 0.19 | -13.1 | 1600 | -26.1 | 12.4 | 10 |
| 40 | 11 | 3 | 0.09 | -13.6 | 1601 | -28.2 | 12.1 | 10 |
| 40 | 15.5 | 3 | 0.12 | -13.4 | 1597 | -28.0 | 10.4 | 10 |
| 40 | 18 | 3 | 0.14 | -13.8 | 1602 | -27.6 | 9.7 | 10 |
| | | | | | | | | |

## Claims

1. Single screw extruder for the production of a frozen food product comprising an extruding screw and cooling means, said extruding screw being **characterized by** between 2 and 6 thread starts and a pitch angle of between 28 and 45 degrees, preferably between 32 and 42 degrees, and a LT/De ratio of between 2 and 10, preferably between 2 and 5, more preferably between 2 and 4.

2. Extruder according to claim 1 wherein the cooling means are constituted by a cooling circuit wherein a cooling liquid is circulated.

3. Extruder according to claim 2 wherein cooling liquid is selected within the group consisting of ammonia or nitrogen.

4. Extruder according to claim 3 wherein the screw comprises between 3 and 4 thread starts and the cooling liquid is ammonia.

5. Extruder according to claim 1 wherein the H/wc ratio is under 0.2, preferably over 0.1.

6. Process for the manufacturing of frozen food product, wherein a food composition is mixed, aerated and cooled down to a temperature of between -4° and -7° and then processed in an extruder for further cooling down to a temperature of between -12° and - 20°, **characterised in that** the extruder is the single screw extruder as defined in any of claims 1 to 5.

## Patentansprüche

1. Einzelschneckenextruder zur Herstellung eines gefrorenen Nahrungsmittelprodukts mit einer Extrudierschnecke und Kühlmitteln, welche Extrudierschnecke durch 2 bis 6 Gewindeanfänge und einen Steigungswinkel von 28 bis 45 Grad, vorzugsweise 32 bis 42 Grad, und einem LT/De-Verhältnis von 2 bis 10, bevorzugt von 2 bis 5, noch mehr bevorzugt von 2 bis 4 **gekennzeichnet** ist.

2. Extruder nach Anspruch 1, wobei die Kühlmittel durch einen Kühlkreis gebildet sind, in welchem eine Kühlflüssigkeit zirkuliert wird.

3. Extruder nach Anspruch 2, wobei die Kühlflüssigkeit ausgewählt ist aus der Gruppe bestehend aus Ammoniak oder Stickstoff.

4. Extruder nach Anspruch 3, wobei die Schnecke 3 bis 4 Gewindeanfänge aufweist und die Kühlflüssigkeit Ammoniak ist.

5. Extruder nach Anspruch 1, wobei das H/wc-Verhältnis unter 0,2, vorzugsweise über 0,1, ist.

6. Verfahren zur Herstellung von gefrorenem Nahrungsmittelprodukt, wobei eine Nahrungsmittel-Zusammensetzung gemischt, mit Luft versetzt und auf eine Temperatur von -4° bis -7° gekühlt und danach in einem Extruder verarbeitet wird zwecks weiterer Kühlung bis zu einer Temperatur von -12° bis -20°, **dadurch gekennzeichnet, dass** der Extruder der Einzelschneckenextruder wie in einem der Ansprüche 1 bis 5 definiert ist.

## Revendications

1. Extrudeuse monovis pour la production d'un produit alimentaire surgelé comprenant une vis d'extrusion et des moyens de refroidissement, ladite vis d'extrusion étant **caractérisée par** un nombre d'entrées de filet compris entre 2 et 6 et un angle de pas compris entre 28 et 45 degrés, de préférence entre 32 et 42 degrés, et un rapport LT/De entre 2 et 10, de manière davantage préférée, entre 2 et 5, de manière encore davantage préférée, entre 2 et 4.

2. Extrudeuse selon la revendication 1, dans laquelle les moyens de refroidissement sont constitués par un circuit de refroidissement dans lequel circule un liquide de refroidissement.

3. Extrudeuse selon la revendication 2, dans laquelle un liquide de refroidissement est sélectionné parmi le groupe comprenant l'ammoniaque ou l'azote.

4. Extrudeuse selon la revendication 3, dans laquelle la vis comprend entre 3 et 4 entrées de filet et le liquide de refroidissement est l'ammoniaque.

5. Extrudeuse selon la revendication 1, dans laquelle le rapport H/wc est inférieur à 0,2, de préférence supérieur à 0,1.

6. Procédé servant à l'élaboration d'un produit alimentaire surgelé, dans lequel une composition alimentaire est mélangée, aérée et refroidie jusqu'à une température comprise entre -4° et -7° et ensuite traitée dans une extrudeuse de manière à être encore refroidie jusqu'à une température comprise entre -12° et -20°, **caractérisé en ce que** l'extrudeuse est l'extrudeuse monovis définie dans l'une quelconque des revendications 1 à 5.
